(19) Europäisches Patentamt / European Patent Office / Office européen des brevets

(11) **EP 4 738 285 A1**

(12) **DEMANDE DE BREVET EUROPEEN**

(43) Date de publication:
06.05.2026 Bulletin 2026/19

(21) Numéro de dépôt: 25184566.5

(22) Date de dépôt: 23.06.2025

(51) Classification Internationale des Brevets (IPC):
$G06V\ 10/82^{(2022.01)}$     $G06V\ 40/50^{(2022.01)}$
$G06F\ 21/32^{(2013.01)}$     $G06F\ 21/35^{(2013.01)}$
$G06F\ 21/36^{(2013.01)}$     $G06N\ 3/045^{(2023.01)}$

(52) Classification Coopérative des Brevets (CPC):
G06V 40/53; G06F 21/32; G06F 21/35;
G06F 21/36; G06N 3/045; G06V 10/82;
H04L 9/3231

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: 30.10.2024 FR 2411883

(71) Demandeur: **Idemia Public Security France
92400 Courbevoie (FR)**

(72) Inventeurs:
• **DESPIEGEL, Vincent
92400 COURBEVOIE (FR)**
• **CHABANNE, Hervé
92400 COURBEVOIE (FR)**
• **MONET, Damien
92400 COURBEVOIE (FR)**

(74) Mandataire: **IPS
2, place Samuel de Champlain
92400 Courbevoie (FR)**

(54) **PROCÉDÉ ET TERMINAL D ENCODAGE BIOMÉTRIQUE ET D'IDENTIFICATION BIOMÉTRIQUE**

(57) Procédé (**300**), mis en œuvre par un dispositif de traitement de données, de génération d'une matrice (**E**) d'encodage biométrique, la méthode prend, en données d'entrée l**300**, un vecteur $\vec{v}_{CA}$, d'une carte d'activation CA d'un réseau de neurones appliqué sur au moins une image d'au moins une donnée biométrique d'un individu (**103**), et fournit, en donnée de sortie (**O300**), une matrice (**E**) d'encodage, la méthode (**300**) comprend les étapes suivantes :

(a) Générer (**301**), à partir de la carte d'activation, une matrice (**P**) de projection selon une direction ($\vec{u}_{DR}$) de référence ;
(b) Générer (**302**) une matrice (**R**) de rotation laissant invariante la direction $\vec{u}_{DR}$ de référence ;
(c) Calculer (**303**) une matrice composée à partir de la matrice (**P**) de projection et de la matrice (**R**) de rotation, la matrice composée étant la matrice (**E**) d'encodage

[Fig. 1]

**Fig. 1**

## Description

**Domaine technique**

La présente invention concerne un procédé et un terminal pour la génération d'une matrice d'encodage d'une donnée biométrique d'un individu. Elle se rapporte également à un support d'enregistrement d'une matrice d'encodage d'une donnée biométrique ainsi qu'à un procédé et un terminal d'identification d'un individu à l'aide de la matrice d'encodage.

**Arrière-plan technique**

Il est courant de recourir à des protocoles d'identification et/ou d'authentification des individus fondés sur la comparaison de certaines de leurs caractéristiques biométriques afin de leur permettre d'accéder à des services à distance, autoriser un accès à des informations stockées dans une base collective ou personnelle de données, vérifier une identité ou encore autoriser un accès à une zone d'accès restreint.

Que ce soit lors d'une authentification ou lors d'une identification, la comparaison des caractéristiques biométriques n'est généralement pas mise en œuvre sur les données brutes directement issues de leur enregistrement mais sur des données biométriques dérivées par suite de l'application d'un traitement algorithmique appelé encodage. Selon la section 3.21 de la norme ISO/IEC 19794-1:2011 Information technology - Biometric data interchange formats - Part 1: Framework, les données biométriques dérivées constituent un « gabarit biométrique » ou « modèle biométrique » qui est distinct des données brutes dont il est issu et peut être comparé à d'autres gabarits biométriques.

Une authentification biométrique consiste généralement à comparer un gabarit biométrique d'épreuve acquis pour un individu à un seul ou un nombre très limité de gabarits biométriques de référence (1:1). Ce type de protocole permet à d'un utilisateur qui souhaite accéder aux ressources d'un système d'information, tel qu'un système d'exploitation, un réseau, une application, un service, une base de données ou encore une application, de prouver son identité à l'aide d'une caractéristique biométrique. L'exploitation d'un protocole d'authentification requiert généralement une étape préalable d'enrôlement par lequel un utilisateur s'identifie en partageant un certain nombre d'informations relatives à son identité auprès de l'entité qui implémente le protocole.

Réaliser une opération bancaire à distance, accéder à une base de données de mots de passe enregistrée sur un téléphone mobile multifonction, ou vérifier, lors d'un passage aux frontières ou lors d'un contrôle par les forces de l'ordre, l'identité d'un individu porteur d'un document d'identité comprenant un élément électronique sécurisé sur lequel sont enregistrées des informations biométriques sont des exemples courant d'application d'un protocole d'authentification.

WO 9526013 A1 [MINNESOTA MINING & MFG [US]] 28.09.1995 décrit un système d'authentification par comparaison d'une caractéristique biométrique d'épreuve acquise auprès d'un individu avec une caractéristique biométrique de référence enregistré dans le système. Le système est en outre configuré pour détecter une caractéristique biométrique variable pour vérifier la vivacité (« liveness ») de l'individu.

A la différence de l'authentification, l'identification requiert la comparaison d'un gabarit biométrique d'épreuve avec de nombreux autres gabarits biométriques de référence préalablement acquis auprès de plusieurs individus (1:N) et généralement stockés dans une base de données. Ce type de protocole permet d'identifier un utilisateur parmi un ensemble d'utilisateurs. La base de données des gabarits biométriques de référence requiert généralement une étape préalable d'enregistrement de gabarits biométriques collectés auprès d'individus identifiés.

Déterminer, par exemple dans le cadre d'une enquête policière, l'identité d'une personne par comparaison d'un dactylogramme de ses dermatoglyphes, d'une image de son iris ou d'une image son visage avec ceux d'une base de données d'individus connus est une application courante d'un protocole d'identification. Un autre exemple d'application est l'accès à une zone d'accès restreint à un nombre limité d'individus.

US 4109237 A [HILL ROBERT B] 22.08.1978 décrit une méthode d'identification d'un individu par comparaison du motif du réseau veineux de son iris avec un ensemble de motifs de réseaux veineux préalablement enregistrés d'une pluralité d'individus.

Il est aujourd'hui courant pour les utilisateurs, lorsqu'ils souhaitent réaliser une opération avec une ressource distante, de s'authentifier et/ou s'identifier à l'aide d'un dispositif mobile, tel qu'un téléphone multifonction, une tablette ou un ordinateur portable, en communication avec cette ressource. Cependant, les données biométriques, qu'elles soient sous forme brutes ou de gabarits, sont des données à caractère personnel très sensibles. Il est nécessaire d'en assurer la confidentialité tout en les préservant du vol et/ou de l'usurpation d'identité.

EP 2 813 961 A1 [KONVALINKA IRA [CA]] 17.12.2014 décrit une méthode d'authentification biométrique mettant en œuvre un dispositif mobile couplé à un serveur distant. Le dispositif comprend un capteur biométrique et une mémoire sur laquelle est enregistrée un gabarait biométrique personnel de référence propre à son utilisateur. Sur requête du serveur, l'utilisateur procède à l'acquisition d'une caractéristique biométrique d'épreuve à l'aide du capteur biométrique du dispositif mobile. Ensuite, le dispositif génère un gabarit biométrique d'épreuve, le compare au gabarit biométrique personnel de référence et transmet un signal de succès ou d'échec au serveur distant. Lors de l'opération, les informations biométriques sont confinées sur le dispositif mobile et ne sont jamais communiquées au serveur. Leur confidentialité est préservée. En revanche, le serveur distant n'a aucune garantie sur l'identité réelle de l'utilisateur du dispositif mobile.

WO 2017/019972 A1 [VISA INT SERVICE ASS [US]] 02.02.2017 décrit une méthode d'authentification biométrique mettant en œuvre un dispositif mobile couplé à un terminal d'accès muni d'un capteur biométrique. Sur le dispositif mobile est enregistré un gabarit biométrique personnel de référence propre à son utilisateur. Le dispositif mobile est configuré pour recevoir un gabarit biométrique d'épreuve généré par le terminal d'accès, comparer ledit gabarit biométrique d'épreuve au gabarit biométrique personnel de référence, et envoyer le résultat de la comparaison au terminal d'accès.

La robustesse et la précision des protocoles d'identification et/ou d'authentification biométrique dépendent de la qualité des gabarits biométriques et des traitements numériques de comparaison qu'elles mettent en œuvre. Les données biométriques étant des données susceptibles d'être affectées par un certain niveau de bruit en raison de leur nature ou des conditions de leur acquisition, les traitements d'encodage de gabarits biométriques sont généralement fondés sur des codes de correction d'erreurs permettant d'extraire un même gabarit biométrique d'une donnée biométrique proche d'une donnée biométrique originale. Les traitements de comparaison de gabarits biométriques peuvent également être fondés sur des traitements de correspondance approximative pour réduire les temps de calcul et/ou introduire une certaine tolérance au bruit inhérent aux données biométriques qu'elles soient comparées chiffrées ou claires.

Dodis, et al. (2004), "Fuzzy extractors: How to generate strong keys from biometrics and other noisy data." Advances In Cryptology-EUROCRYPT 2004: International Conference On The Theory And Applications Of Cryptographic Techniques, Interlaken, Proceedings 23, décrit deux exemples de traitement d'encodage : les extracteurs à logique floue (« fuzzy extractor ») et les schémas sécurisés (« secure sketch »).

Galbraith, et al (2019). "Obfuscated fuzzy hamming distance and conjunctions from subset product problems." Theory of Cryptography Conference, décrit un exemple de traitement de correspondance à logique floue pour la distance de Hamming.

### Résumé de l'invention

Un premier inconvénient des traitements actuels d'encodage des gabarits biométriques et/ou de correspondance entre gabarits biométriques est qu'ils imposent un certain nombre de contraintes sur les données biométriques et les données de sortie. A titre d'exemple, dans le cas des schémas sécurisés (« secure skectches »), ils imposent des contraintes de format et/ou de taille de la donnée biométrique selon les paramètres du code correcteur. D'autre part, les algorithmes cryptographiques que mettent en œuvre les traitements actuels d'encodage reposent sur des primitives cryptographiques qui ont chacun leur propre format de données d'entrée ou de sortie. Lorsque plusieurs de ces primitives sont utilisées, il faut veiller à leur interopérabilité et, généralement, prévoir des opérations de transformations des données intermédiaires pour permettre cette interopérabilité.

Un deuxième inconvénient des protocoles actuels d'identification et/ou d'authentification, qu'ils mettent en œuvre ou non des traitements d'encodage et/ou de comparaison fondés des codes de correction d'erreur, est qu'il requiert le stockage d'un ou plusieurs gabarits biométriques de référence, parfois au sein d'une base de données. Ces gabarits biométriques, même stockés sous une forme chiffrée et/ou dans des environnements sécurisés, ne sont pas à l'abri d'intrusion, d'altération et/ou d'extraction frauduleuse.

Il est donc un besoin d'une solution simple et efficace d'encodage biométrique qui réduise les contraintes sur les données biométriques et les données de sortie tout en garantissant leur confidentialité et leur insaisissabilité.

Dans un premier aspect de l'invention, il est fourni un procédé, mis en œuvre par un dispositif de traitement de données, de génération d'une matrice d'encodage biométrique, le procédé prend, en données d'entrée, un vecteur, d'une carte d'activation d'un réseau de neurones appliqué sur au moins une image d'au moins une donnée biométrique d'un individu, et fournit, en donnée de sortie, une matrice d'encodage, le procédé comprend les étapes suivantes :

  (a) Générer, à partir de la carte d'activation, une matrice de projection selon une direction de référence ;
  (b) Générer une matrice de rotation laissant invariante la direction de référence ;
  (c) Calculer une matrice composée à partir de la matrice de projection et de la matrice de rotation, la matrice composée étant la matrice d'encodage.

Selon certains modes de réalisation, la matrice de rotation est une matrice aléatoire.

Selon certains modes de réalisation, la direction de référence est propre à une base de données d'identification d'une pluralité d'individus et/ou à une entité de confiance pour l'identification d'un ou plusieurs individus.

Selon certains modes de réalisation, la donnée biométrique de l'individu peut notamment être choisie parmi un ou plusieurs dactylogrammes digitaux et/ou palmaires, une ou plusieurs images d'iris iris et/ou une ou plusieurs images de visage, ou leur combinaison.

Selon certains modes de réalisation, le procédé comprend, en outre, les étapes suivantes :

  (e) Générer, avant l'étape de calcul, une matrice inversible aléatoire d'offuscation propre à une entité de confiance pour l'identification d'un ou plusieurs individus ;

(f) Calculer, après l'étape de calcul, une matrice d'encodage offusquée composée de la matrice inversible aléatoire et de la matrice d'encodage.

Dans un deuxième aspect de l'invention, il est fourni un terminal d'encodage biométrique comprenant des moyens pour mettre en œuvre un procédé de génération d'une matrice d'encodage biométrique selon le premier aspect de l'invention.

Dans un troisième aspect de l'invention, il est fourni un support d'enregistrement sur lequel est enregistrée une matrice d'encodage obtenu à l'aide d'un procédé de génération d'une matrice d'encodage biométrique selon le premier aspect de l'invention.

Selon certains modes de réalisation, la matrice d'encodage est enregistrée sous la forme d'un code bidimensionnel sur le support d'enregistrement

Selon certains modes de réalisation, le support d'encodage est un support d'enregistrement non-transitoire lisible par un dispositif de traitement de données.

Dans un quatrième aspect de l'invention, il est fourni un procédé d'identification biométrique d'un individu à l'aide d'une matrice d'encodage obtenue à l'aide d'un procédé de génération selon le premier aspect de l'invention, le procédé comprend les étapes suivantes :

(a) Récupérer une matrice d'encodage d'un individu par lecture, de préférence sans contact, d'un support d'enregistrement ;

(b) Acquérir une donnée biométrique dudit individu ;

(c) Générer, à partir de la donnée biométrique, un vecteur de carte d'activation par application d'un réseau de neurones ;

(d) Générer, à partir du vecteur de carte d'activation, un vecteur d'encodage par application de la matrice d'encodage ;

(e) Calculer une mesure de similarité entre le vecteur d'encodage et une direction de référence ;

(f) Valider l'identification de l'individu par comparaison de la valeur de la mesure de similarité avec une valeur seuil préalablement définie.

Selon certains modes de réalisation, le procédé d'identification biométrique comprend, en outre, après l'étape de récupération et avant l'étape de génération d'un vecteur d'encodage, une étape de calcul d'une matrice d'encodage par application d'une matrice de révélation sur la matrice d'encodage offusquée, ladite matrice de révélation étant la matrice inverse de la matrice inversible aléatoire d'offuscation utilisée pour offusquer ladite matrice d'encodage.

Selon certains modes de réalisation, la mesure de similarité est choisie parmi une similarité cosinus, une distance euclidienne ou une distance de Hamming.

Selon certains modes de réalisation, lorsque la mesure de similarité est inférieure ou égale à la valeur seuil, le procédé renvoie une chaîne spécifique de caractères et, lorsque la mesure de similarité est supérieure à la valeur seuil, le procédé renvoie une chaîne aléatoire de caractère.

Dans un cinquième aspect de l'invention, il est fourni un terminal d'identification biométrique d'un individu comprenant :

- un dispositif d'acquisition d'une donnée biométrique d'un individu ;
- un dispositif de lecture d'un support d'enregistrement sur lequel est enregistrée une matrice d'encodage obtenue à l'aide d'un procédé de génération selon l'un quelconque des quelconques modes de réalisation du premier aspect de l'invention ;
- un dispositif de traitement de données comprenant des moyens pour la mise en œuvre d'un procédé d'identification selon l'un quelconque des modes de réalisation du quatrième aspect de l'invention.

**Brève description des dessins**

**Fig. 1** est une représentation schématique d'une zone de contrôle d'accès comprenant un terminal d'identification biométrique et un système de portes.

**Fig. 2** est un exemple détaillé de terminal d'identification biométrique.

**Fig. 3** est un diagramme de flux d'un procédé de génération d'une matrice d'encodage selon un premier aspect de l'invention.

**Fig. 4** est une représentation schématique simplifiée de génération d'une matrice d'encodage à l'aide du procédé selon l'invention.

**Fig. 5** est une représentation schématique d'un terminal d'encodage sous la forme d'un automate d'enrôlement biométrique.

**Fig. 6** est une représentation schématique d'un terminal d'encodage sous la forme d'un dispositif électronique mobile.

**Fig. 7** est une représentation schématique d'exemple de support d'enregistrement d'une matrice d'encodage.

**Fig. 8** est un diagramme de flux d'un procédé d'identification à l'aide d'une matrice d'encodage.

**Description détaillée des modes de réalisation**

Dans le cadre de la présente divulgation, les modes de réalisation sont décrits dans le contexte général d'un ou plusieurs matériels ou dispositifs capables d'exécuter des instructions préchargées telles que, par exemple, des instructions exécutables par ordinateur pour l'exécution de modules de programme. Les modules de programme peuvent comprendre une ou plusieurs routines, programmes, objets, variables, commandes, scripts, fonctions, applications, composants, structures de données qui peuvent exécuter des tâches particulières ou mettre en œuvre des types particuliers de données abstraites.

Certains modes de réalisation peuvent également être mis en œuvre dans des environnements informatiques distribués où les tâches sont exécutées par des dispositifs distants de traitement de données qui sont reliés par un réseau de communication. Dans un environnement informatique distribué, les modules de programme peuvent se trouver sur des supports de stockage informatique locaux et/ou distants, y compris des dispositifs de stockage mémoire.

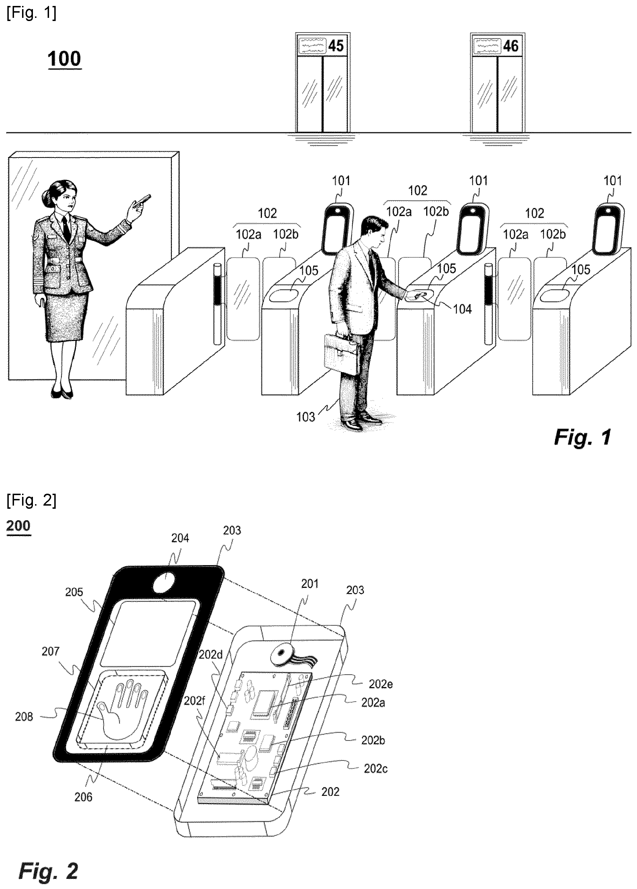

En référence à la **Fig. 1,** une zone **100** de contrôle d'accès à un site, un évènement ou un territoire peut comprendre un terminal **101** d'identification biométrique et un système **102** de portes **102a, 102b** d'accès dont l'ouverture ou la fermeture, à un individu **103,** est conditionnée par l'échec ou la réussite d'une identification biométrique dudit individu **103** par ledit système **101** d'identification biométrique.

Lorsqu'un individu **101** souhaite accéder au site, à l'évènement ou au territoire, il doit d'abord s'identifier auprès du terminal **101** d'identification biométrique en soumettant une requête en identification auprès dudit terminal **101.** Selon l'exemple, représenté sur la **Fig. 1,** la requête peut être soumise par l'intermédiaire d'un terminal mobile **104,** tel qu'un téléphone mobile multifonction, sur lequel sont enregistrés des données d'identité, telles qu'un identifiant, un passeport, et/ou un ticket électronique. Le terminal **101** d'identification biométrique peut alors communiquer avec un lecteur **105** sans contact adapté à la lecture d'une mémoire non-transitoire ou d'un élément sécurisé du terminal **104** mobile afin d'accéder aux données d'identité et/ou au ticket électronique qui y sont stockés. Selon un autre exemple équivalent, la requête peut être soumise par apposition d'un ticket physique ou d'une carte à puce sur le lecteur **105** du terminal **101** d'identification biométrique. Le lecteur **105** peut être un lecteur sans contact adapté à la lecture d'une mémoire non-transitoire ou d'un élément sécurisé contenu dans la carte à puce ou le ticket physique, et/ou un lecteur optique adapté à la lecture d'un code, tel qu'un QR code, affiché sur le ticket.

Une fois la requête soumise, le terminal **101** d'identification biométrique procède à lecture à du contenu de l'élément sécurisé du terminal **104** mobile puis à l'acquisition d'une caractéristique biométrique d'épreuve de l'individu **103** à l'aide d'un dispositif d'acquisition approprié. La caractéristique biométrique est généralement choisie parmi les dermatoglyphes d'un ou plusieurs doigts, les dermatoglyphes palmaires, un ou plusieurs iris, ou un visage, ou leur combinaison. Dans l'exemple de la **Fig. 1,** le terminal **101** d'identification biométrique est un terminal d'identification biométrique par reconnaissance faciale ou d'iris et le dispositif d'acquisition est une caméra.

Une fois la caractéristique biométrique d'épreuve acquise par le dispositif d'acquisition, le terminal **101** d'identification biométrique procède à l'identification de l'individu 103 sur la base de cette caractéristique biométrique. Si l'individu **103** est identifié, il est autorisé à accéder au site, à l'évènement ou au territoire. A cette fin, le terminal **101, 200** d'identification biométrique envoie un signal de commande d'ouverture des portes **102a, 102b** au système **102** de portes **102a, 102b.** Dans le cas contraire, l'utilisateur **103** n'est pas identifié et l'accès lui est refusé. Les portes **102a, 102b** du systèmes **102** de portes **102a, 102b** restent closes. Le terminal **101** d'identification biométrique peut notifier l'utilisateur **103** de la réussite ou de l'échec de l'identification à l'aide d'un signal lumineux, un signal sonore, un message, ou leur combinaison.

Un exemple **200** détaillé de terminal **101** d'identification biométrique est illustré sur la **Fig. 2.** Le terminal **200** d'identification biométrique comprend un module physique **201** d'acquisition d'images, un module physique **202** de traitement de données et un boîtier **203** de protection.

Le module physique **201** d'acquisition d'images se présente sous la forme d'une caméra adaptée à l'acquisition de l'image d'un ou plusieurs iris ou d'un visage. Le boîtier **203** de protection comprend une fenêtre **204** transparente ou semi-transparente pour permettre l'acquisition de l'image par le module **201** d'acquisition d'images, et un écran **205** d'affichage ou interactif. De manière alternative ou complémentaire au module physique **201** d'acquisition d'images, le terminal **200** d'identification biométrique peut comprendre un module physique **206** d'acquisition d'un dactylogramme d'un dermatoglyphe d'un ou plusieurs doigts et/ou d'un dermatoglyphe palmaire. En surface du boitier **203** de protection, une zone **207** d'acquisition peut être aménagée laissant à découvert la surface active **208** dudit module physique **206** d'acquisition afin qu'un individu **103** puisse y placer un ou plusieurs de ses doigts et/ou la paume d'une de ses mains.

Le module physique **201** d'acquisition d'images et/ou le module physique **206** d'acquisition de dactylogrammes transmettent les données acquises au module physique **202** de traitement de données au moyen d'un connecteur (non représenté). Le module physique **202** de traitement de données comprend des moyens pour la mise en œuvre d'une identification biométrique. Il est chargé d'exécuter automatiquement des séquences d'opérations arithmétiques ou logiques pour réaliser des tâches ou des actions. Ce module, communément appelé ordinateur, peut comprendre une ou plusieurs unités centrales de traitement (CPU) **202a** et/ou un ou plusieurs processeurs graphiques (GPU) **202b,** un module physique **202c** de communication à distance, un ou plusieurs modules physique **202d** d'entrée / sortie pour l'échanges de données avec des dispositifs externes, un support **202e** de stockage transitoire tel qu'une mémoire vive (RAM), un support **202f** d'enregistrement non-transitoire, et des bus de communication (non représentés) pour le transfert de données entre les composants internes module **202** de traitement de données.

Le module physique **202** de traitement de données permet l'exécution d'un ou plusieurs modules de programmes comprenant des instructions qui, lorsque le ou les modules de programme sont exécutés, conduisent le module **202** de traitement de données à mettre en œuvre une identification biométrique. Le ou les modules de programme peuvent être écrits en tout langage de programmation, compilé ou interprété. Ils peuvent faire partie d'une solution logicielle, c'est-à-dire d'une collection d'instructions exécutables, de codes, de scripts ou autres et/ou de bases de données.

Le terminal **101, 200** d'identification biométrique tel que décrit précédemment peut être utilisé à d'autres fins, telles qu'autoriser l'accès à un ou plusieurs services à distance, autoriser un accès à des informations stockées dans une base collective ou personnelle de données, vérifier l'identité d'une ou plusieurs personnes, récupérer des identifiants de connexion, ou encore récupérer une ou plusieurs adresses de portefeuilles de monnaie électronique telle qu'une crypto-monnaie.

Traditionnellement, selon les protocoles d'identification biométrique de l'état de la technique, le terminal **101, 200** d'identification biométrique est configuré pour générer, selon un schéma d'encodage, un gabarit biométrique d'épreuve à partir de la caractéristique biométrique d'épreuve acquise par le dispositif **201, 206** d'acquisition d'image ou de dermatoglyphe, puis le comparer à un ou plusieurs gabarits biométriques de référence stockés dans une base de données. S'il existe une correspondance entre le gabarit biométrique d'épreuve et un gabarit biométrique de référence, l'individu **103** est identifié et est autorisé à accéder au site, à l'évènement ou au territoire. Dans le cas contraire, l'utilisateur **103** n'est pas identifié et l'accès lui est refusé.

Afin de garantir la sécurité et la confidentialité des gabarits biométriques et des données à caractère personnel, l'ensemble des données échangés et enregistrés par les différents terminaux décrits précédemment sont généralement chiffrées selon divers protocoles de chiffrement à l'aide d'éléments sécurisés. Comme relevé précédemment, ces divers protocoles de chiffrement imposent des contraintes fortes sur la taille et le format de ces données. D'autre part, les protocoles actuels d'identification biométrique requiert le stockage d'un ou plusieurs gabarits biométriques de référence. Ces gabarits biométriques, même stockés sous une forme chiffrée et/ou dans des environnements sécurisés, ne sont pas à l'abri d'intrusion, d'altération et/ou d'extraction frauduleuse.

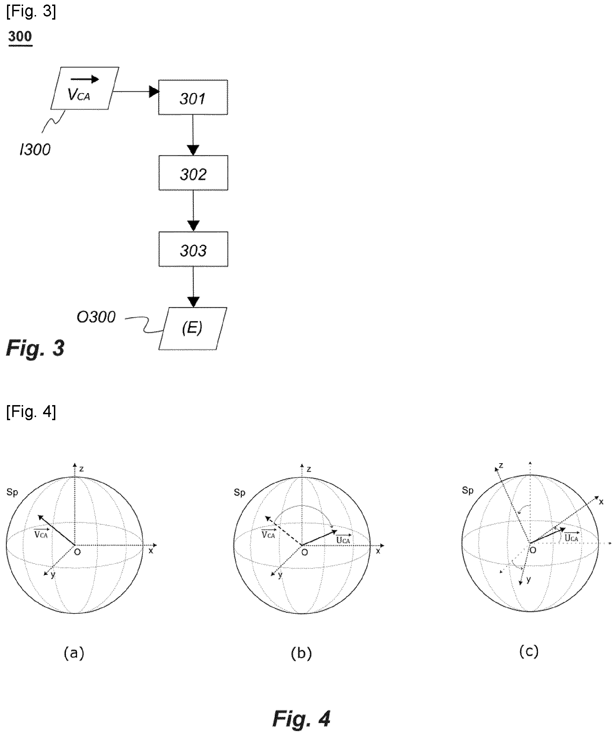

La présente invention s'affranchit de l'utilisation de gabarits biométriques et ainsi des contraintes liées au chiffrement et au stockage des données biométriques. Selon un premier aspect de l'invention, en référence aux **Fig. 3**, il est fourni **[R1]** un procédé **300,** mis en œuvre par un dispositif de traitement de données, de génération d'une matrice (**E**) d'encodage biométrique, la méthode prend, en données d'entrée **I300,** un vecteur $\vec{v}_{CA}$, d'une carte d'activation d'un réseau de neurones appliqué sur au moins une image d'au moins une donnée biométrique d'un individu **103,** et fournit, en donnée de sortie **O300,** une matrice (**E**) d'encodage, la méthode **300** comprend les étapes suivantes :

(a) Générer **301,** à partir de la carte d'activation, une matrice (**P**) de projection selon une direction $\vec{u}_{DR}$ de référence ;
(b) Générer **302** une matrice (**R**) de rotation laissant invariante la direction $\vec{u}_{DR}$ de référence ;
(c) Calculer **303** une matrice composée à partir de la matrice (**P**) de projection et de la matrice (**R**) de rotation, la matrice composée étant la matrice (**E**) d'encodage.

Dans le cadre de la présente divulgation, il est entendu par « donnée biométrique » tout type de donnée représentant une ou plusieurs caractéristiques biométriques brutes d'un individu sans qu'il y ait eu un traitement préalablement par un algorithme d'encodage. En particulier, une donnée biométrique, au sens de la présent divulgation, n'est pas un « gabarit biométrique », notamment tel que défini dans la norme ISO/IEC 19794-1:2011 Information technology - Biometric data interchange formats - Part 1: Framework.

Il est entendu par « carte d'activation » ou « carte des caractéristiques » d'un réseau de neurones, un vecteur $\vec{v}_{CA}$ qui représente les résultats de l'application d'une ou plusieurs couches d'un réseau de neurones sur une image d'entrée, en l'occurrence une donnée biométrique sous la forme d'une image.. Les réseaux de neurones applicables à des images de données biométriques sont connus de l'état de la technique, par exemple He, K., Zhang, X., Ren, S., & Sun, J. (2016). Deep residual learning for image recognition. In Proceedings of the IEEE conference on computer vision and pattern recognition (pp. 770-778) décrit un exemple de réseau de neurones convolutive, et Dosovitskiy, A. (2020). An image is worth 16x16 words: Transformers for image recognition at scale. arXiv preprint arXiv:2010.11929 décrit un exemple de réseau de neurones attentionnel.

Selon le réseau de neurones, la taille de la carte d'activation peut parfois être assez importante et une réduction dimensionnelle peut être avantageuse pour faciliter son exploitation et réduire les charges de calcul dans le cadre de procédé selon l'invention. Ainsi, le procédé **300** peut comprendre une étape préliminaire **301a** de génération, à partir du vecteur de carte d'activation, d'une matrice (**D**) de réduction vers un espace de dimension inférieure au vecteur de la carte d'activation.

L'étape **303** de calcul de la matrice (**E**) d'encodage est alors une composition ladite matrice (**D**) de réduction, de la matrice (**P**) de projection et de la matrice (**R**) de rotation.

La donnée biométrique de l'individu peut notamment être choisie parmi un ou plusieurs dactylogrammes digitaux et/ou palmaires, une ou plusieurs images d'iris iris et/ou une ou plusieurs images de visage, ou leur combinaison. Des exemples de combinaison peuvent être une concaténation de données biométriques différentes ou une moyenne de données biométriques de même type telle qu'une moyenne de plusieurs images d'un même visage.

Lors de l'étape **301,** une matrice de projection (**P**) est générée pour projeter le vecteur $\vec{v}_{CA}$ de la carte d'activation selon une direction, $\vec{u}_{DR}$, de référence. En d'autres termes, il s'agit de déterminer une matrice (**P**) telle que $(P)\vec{v}_{CA} = \vec{u}_{DR}$.

Selon un exemple purement illustratif, en référence à la **Fig. 4,** un vecteur $\vec{v}_{CA}$ de carte d'activation peut être représentée dans une hypersphère **Sp** (Fig. 4a). Pour des pour des raisons de simplification, l'hypersphère **Sp** représentée est une hypersphère de dimension 2 et la carte d'activation est un vecteur $\vec{v}_{CA}$ de dimension 3.

Dans cet exemple, lors de l'étape **301,** une matrice de projection (**P**) est déterminée de sorte que, dans un repère cartésien (**O**, **x**, **y**, **z**), le vecteur $\vec{v}_{CA} = (v_x, v_y, v_z )$ de la carte d'activation est transformé, après application de ladite matrice de projection (**P**), un autre vecteur représentant une direction $\vec{u}_{DR} = (u_x, u_y, u_z)$ de référence dans l'hypersphère **Sp** (Fig. 4b). Il s'agit alors, dans cet exemple, de déterminer une matrice (**P**) de projection de dimension 3, 3 telle que $(P)(v_x, v_y, v_z) = (u_x, u_y, u_z)$.

Lore de l'étape **302,** une matrice (**R**) de rotation est générée laissant invariante la direction $\vec{u}_{DR}$ de référence (**Fig. 4c**). Autrement dit, il s'agit de déterminer une matrice (**R**) telle que $(R)\vec{u}_{DR} = \vec{u}_{DR}$, soit une matrice (**R**) de rotation dont la direction, $\vec{u}_{DR}$, de référence est un vecteur propre. Il existe une infinité de matrices possibles satisfaisant cette condition. Selon des modes préférés de réalisation, la matrice (**R**) de rotation est une matrice aléatoire.

En référence à l'exemple illustratif de la **Fig. 4,** une matrice (**R**) de rotation est déterminée de manière à laisser invariante la direction $\vec{u}_{DR} = (u_x, u_y, u_z)$ de référence. Cette opération est illustrée par la rotation du repère (**O, x, y, z**) de l'hypersphère **Sp** autour de la direction $\vec{u}_{DR}$.

Lors de l'étape **303,** la matrice (**P**) de projection et la matrice (**R**) de rotation, déterminées dans lors des étapes précédentes, sont multipliés pour former une matrice composée (**E**) d'encodage.

Au terme de l'étape **303,** seule la matrice (**E**) d'encodage est conservé. Le vecteur $\vec{v}_{CA}$ de la carte d'activation représentant la donnée biométrique n'a servi que de moyen pour la détermination de ladite matrice (**E**) d'encodage et n'est pas conservé. Ainsi, aucune information directement liée à la donnée biométrique, par exemple son image, ou qui en est directement dérivée, par exemple un gabarit biométrique, ne fait l'objet d'un enregistrement.

Puisque la matrice (**E**) d'encodage est calculée à partir de la carte d'activation représentant la donnée biométrique propre à un individu, elle est propre à chaque individu. Elle est différente entre les individus, et chaque individu est propriétaire de sa matrice (**E**) d'encodage. En revanche, la direction $\vec{u}_{DR}$ de référence peut être commune entre plusieurs individus ou spécifique à chaque individu selon les applications.

Grâce à la composition de la matrice (**P**) de projection et la matrice (**R**) de rotation, la récupération de la donnée biométrique à partir de la matrice (**E**) d'encodage, par exemple par des opérations d'inversion, est impossible. D'autre part, dans l'éventualité où un tiers, par un acte frauduleux, parviendrait à se saisir d'une matrice (**E**) d'encodage et d'une donnée biométrique brute de son propriétaire, l'application, par ce tiers, de cette matrice sur la donnée brute ne permet pas de récupérer la carte d'activation ayant servi à son calcul. Cette application ne lui permet pas non plus d'usurper l'identité du propriétaire puisque cette opération fournirait un résultat différent, notamment une direction différente de la direction $\vec{u}_{DR}$ de référence.

Un avantage remarquable de l'invention est qu'aucune information biométrique de référence propre à chaque individu n'est requise pour les identifier. Il est donc inutile, lors par exemple d'une phase d'enrôlement, de récupérer, pour stockage ou association avec la base de données des individus, les données biométriques de chaque d'individu pour en dériver des informations biométriques de référence dans l'objectif de les identifier ultérieurement lors d'une phase d'identification.

Sans être une condition requise dans le cadre de la présente divulgation, la matrice (**E**) d'encodage n'a pas besoin de faire l'objet d'un chiffrement puisqu'elle constitue elle-même une dissimulation indirecte de la donnée biométrique, puisqu'elle ne la contient pas. Aussi, peut-elle notamment faire l'objet d'un enregistrement non chiffré sur un support non-transitoire de stockage électronique ou d'une impression sous forme d'un code lisible sur un support physique, tel qu'un ticket ou un billet de transport ou évènementiel.

La direction $\vec{u}_{DR}$ de référence constitue la référence à partir de laquelle un ou plusieurs individus peuvent être identifiés. Notamment, selon certains modes de réalisation, la direction $\vec{u}_{DR}$ de référence est propre à une base de données d'identification d'une pluralité d'individus et/ou à une entité de confiance pour l'identification d'un ou plusieurs individus. Les individus de la base de données et/ou associés à l'entité de confiance peuvent alors faire l'objet d'une identification sur la seule base de cette direction $\vec{u}_{DR}$ de référence, de préférence tenue secrète, par application de la matrice (**E**) d'encodage propre à chaque individu selon un procédé d'identification biométrique décrit ci-après dans le cadre du troisième aspect de l'invention. De préférence, la direction $\vec{u}_{DR}$ de référence est tenue secrète et connue uniquement du propriétaire de la base de données d'identification et/ou de l'entité de confiance.

A titre d'exemple, une entité organisatrice d'un évènement tel qu'un concert, un festival, une représentation culturelle, théâtrale cinématographique ou sportive, ou encore une compagnie de transport routier, ferroviaire ou aérien peuvent définir une même direction $\vec{u}_{DR}$ de référence pour une base de données d'individus à identifier préalablement inscrits pour un ou plusieurs évènements donnés ou voyages spécifiques. Une direction $\vec{u}_{DR}$ de référence différente peut aussi être choisie pour chaque événement ou voyage. Une direction $\vec{u}_{DR}$ de référence particulière étant alors associée à la base de données d'individus à identifier associée à cet évènement ou ce voyage ; elle a la même pour tous les individus de la base de données.

Selon un autre exemple, une entité de confiance telle qu'une administration gouvernementale peut définir une direction $\vec{u}_{DR}$ de référence DR commune mais unique pour identifier un ou plusieurs individus préalablement enrôlés pour, par exemple, l'accès à différents services administratifs ou un passage de frontières.

Pour certaines applications dans lesquelles un niveau élevé de sécurité et/ou de préservation de la confidentialité des données biométriques est nécessaire, par exemple lors d'une certification sûre et certaine d'une identité, ou lorsque la matrice (E) d'encodage est susceptible d'être publiquement exposée, par exemple sur un billet de transport ou d'évènement, ou de faire l'objet de menaces numériques en raison de l'identité de son porteur, il peut être avantageux d'ajouter une couche de sécurité supplémentaire par une opération de dissimulation ou d'offuscation.

Ainsi, selon certains modes de réalisation, le procédé 300 comprend, en outre, les étapes suivantes :

(e) Générer 303a, avant l'étape de calcul 303, une matrice inversible (S) aléatoire d'offuscation propre à une entité de confiance pour l'identification d'un ou plusieurs individus ;
(f) Calculer 304, après l'étape de calcul 303, une matrice (O) = (S)(E) d'encodage offusquée composée de la matrice inversible (S) aléatoire et de la matrice (E) d'encodage.

L'application d'une matrice inversible (S) aléatoire permet de dissimuler davantage la matrice (E) d'encodage en modifiant sa valeur. Ainsi, seule l'entité de confiance détentrice de la matrice inverse (S⁻¹) de la matrice inversible (S) peut accéder à la matrice (E) d'encodage pour l'indentification de son propriétaire. D'autre part, un tiers qui, par un acte frauduleux, parviendrait à se saisir d'une matrice (O) d'encodage offusquée serait d'autant moins capable de l'exploitation à des fins d'usurpation d'identité qu'elle fournit, lors de son application, un résultat totalement inutilisable sans une connaissance préalable de la matrice inverse (S⁻¹).

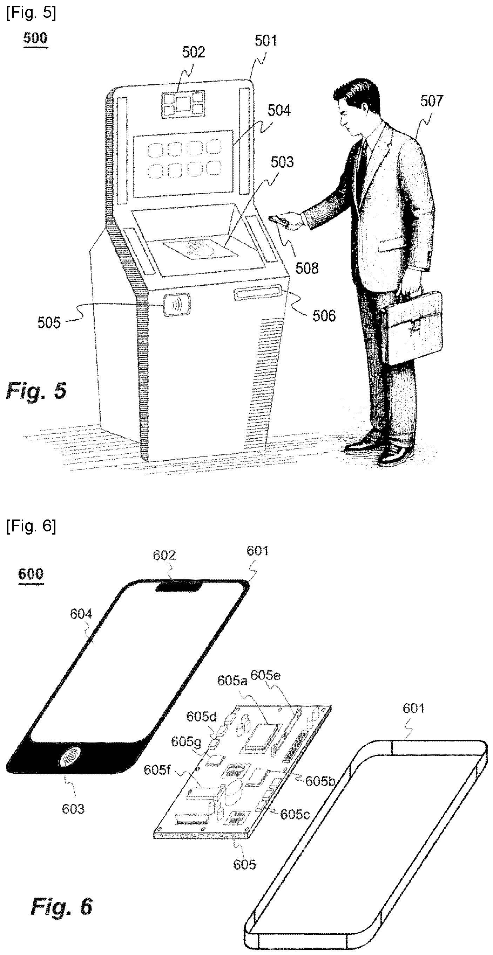

Dans un deuxième aspect de l'invention, en référence aux **Fig. 5 & Fig., 6,** il est fourni un terminal **500, 600** d'encodage comprenant des moyens pour mettre en œuvre un procédé **300** de génération d'une matrice d'encodage biométrique selon l'un des quelconques modes de réalisation du premier aspect de l'invention.

Selon un premier exemple de mode de réalisation, en référence à la **Fig. 5,** le terminal d'encodage peut être un automate **500** d'enrôlement biométrique tel qu'un kiosk, notamment pour le voyage ou la billetterie. Le terminal **500** comprend un support **501,** un module physique **502** d'acquisition d'images et/ou un module physique **503** d'acquisition de dactylogrammes, un module physique **504** d'affichage, un module physique **505** de communication sans contact, et un module physique de traitement de données (non représenté). Le terminal peut également comprendre un module **506** d'édition de billets ou de tickets.

Le support **501** se présente sous la forme d'un kiosk dont l'ergonomie est adaptée pour une interaction avec un individu **507** tel qu'un voyageur ou un acheteur, notamment par l'intermédiaire du module physique **504** d'affichage sur lequel des instructions à destination de l'individu **507** peuvent être affichées. Le module physique **502** d'acquisition d'images se présente sous la forme d'une caméra adaptée à l'acquisition de l'image d'un ou plusieurs iris ou d'un visage. Le module physique **502** d'acquisition d'images et/ou le module physique **503** d'acquisition de dactylogrammes transmettent les données acquises au module physique de traitement de données au moyen de connectiques appropriées. Le module physique de traitement de données est similaire à celui représenté sur la **Fig. 2.** Il comprend des moyens pour la mise en œuvre d'un procédé **300** de génération d'une matrice (E) d'encodage biométrique selon l'un quelconque mode de réalisation du premier aspect de l'invention. Il est notamment chargé d'exécuter automatiquement des séquences d'opérations arithmétiques ou logiques pour réaliser des tâches ou des actions. Ce module, communément appelé ordinateur, peut comprendre une ou plusieurs unités centrales de traitement (CPU) et/ou un ou plusieurs processeurs graphiques (GPU), un module physique de communication à distance, un ou plusieurs modules physique d'entrée / sortie pour l'échanges de données avec des dispositifs externes, un support de stockage transitoire tel qu'une mémoire vive (RAM), un support d'enregistrement non-transitoire, et des bus de communication (non représentés) pour le transfert de données entre les composants internes module de traitement de données.

Le module physique de traitement de données permet l'exécution d'un ou plusieurs modules de programmes comprenant des instructions qui, lorsque le ou les modules de programme sont exécutés, conduisent le module de traitement de données à mettre en œuvre un procédé **300** de génération d'une matrice (**E**) d'encodage biométrique selon l'un quelconque mode de réalisation du premier aspect de l'invention. Le ou les modules de programme peuvent être écrits en tout langage de programmation, compilé ou interprété. Ils peuvent faire partie d'une solution logicielle, c'est-à-dire d'une collection d'instructions exécutables, de codes, de scripts ou autres et/ou de bases de données.

Le module physique **505** de communication sans contact permet un échange d'informations entre le terminal **500** d'encodage et une mémoire non-transitoire et/ou un élément sécurisé d'une carte à puce ou d'un terminal électronique mobile **508** tel qu'un téléphone multifonction. Il permet notamment de transférer les données d'une matrice (**E**) d'encodage générée par le terminal **500** d'encodage vers la mémoire non-transitoire et/ou un élément sécurisé de la carte à puce ou du terminal électronique mobile **508** pour son enregistrement dans ladite carte à puce ou ledit du terminal électronique mobile **508**. L'échange d'informations entre module physique **505** de communication et la carte à puce ou le terminal électronique mobile **508** peut être réalisé selon un protocole de communication en champ proche (« Near-Field Communication ») et/ou à courte distance tel que Bluetooth® ou Wi-Fi™.

Dans un contexte de voyage et/ou de participation à un évènement, la matrice ((**E**) d'encodage peut faire partie d'un ticket ou d'un billet également généré par le terminal **500** d'encodage. S'il est sous forme électronique, le ticket ou le billet peut être transféré par le terminal 500 d'encodage vers la mémoire non-transitoire et/ou un élément sécurisé de la carte à puce ou du terminal électronique mobile **508** pour son enregistrement dans ladite carte à puce ou ledit du terminal électronique mobile **508** par l'intermédiaire du module physique **505** de communication sans contact. S'il est sous forme physique, par exemple sous forme papier, il peut être imprimé par le terminal **500** d'encodage via son module **506** d'édition, par exemple une imprimante, pour une récupération par l'utilisateur **507**.

Selon un deuxième exemple de mode de réalisation, en référence à la **Fig. 6,** le terminal d'encodage peut être un dispositif électronique mobile **600** tel qu'un téléphone multifonctions ou dispositif mobile d'acquisition biométrique. Le terminal **600** comprend un boitier **601,** un module physique **602** d'acquisition d'images et/ou un module physique **603** d'acquisition de dactylogrammes, un module physique **604** d'affichage, et un module physique 605 de traitement de données.

Le module physique **502** d'acquisition d'images se présente sous la forme d'une caméra adaptée à l'acquisition de l'image d'un ou plusieurs iris ou d'un visage. Le module physique **502** d'acquisition d'images et/ou le module physique **503** d'acquisition de dactylogrammes transmettent les données acquises au module physique de traitement de données au moyen de connectiques appropriées. Le module physique de traitement de données est similaire à celui représenté sur la **Fig. 2.** Il comprend des moyens pour la mise en œuvre d'un procédé **300** de génération d'une matrice (E) d'encodage biométrique selon l'un quelconque mode de réalisation du premier aspect de l'invention. Il est notamment chargé d'exécuter automatiquement des séquences d'opérations arithmétiques ou logiques pour réaliser des tâches ou des actions. Ce module, communément appelé ordinateur, peut comprendre une ou plusieurs unités centrales **605a** de traitement (CPU) et/ou un ou plusieurs processeurs graphiques **605b** (GPU), un module physique **605c** de communication à distance, un ou plusieurs modules physiques **605d** d'entrée / sortie pour l'échanges de données avec des dispositifs externes, un support **605e** de stockage transitoire tel qu'une mémoire vive (RAM), un support **605f** d'enregistrement non-transitoire, et des bus de communication (non représentés) pour le transfert de données entre les composants internes module de traitement de données. Il peut également comprendre un élément sécurisé **605g**.

Le module physique **605** de traitement de données permet l'exécution d'un ou plusieurs modules de programmes comprenant des instructions qui, lorsque le ou les modules de programme sont exécutés, conduisent le module de traitement de données à mettre en œuvre un procédé **300** de génération d'une matrice (**E**) d'encodage biométrique selon l'un quelconque mode de réalisation du premier aspect de l'invention. Le ou les modules de programme peuvent être écrits en tout langage de programmation, compilé ou interprété. Ils peuvent faire partie d'une solution logicielle, c'est-à-dire d'une collection d'instructions exécutables, de codes, de scripts ou autres et/ou de bases de données.

Une fois générée, la matrice (E) d'encodage peut être enregistrée dans un support **605f** d'enregistrement non-transitoire ou dans l'élément sécurisé **605g** du terminal **600**. Dans un contexte de voyage et/ou de participation à un évènement, la matrice (**E**) d'encodage peut faire partie d'un ticket ou d'un billet électronique généré par le terminal **500** d'encodage et enregistrée dans son support **605f** d'enregistrement non-transitoire ou dans son élément sécurisé **605g**.

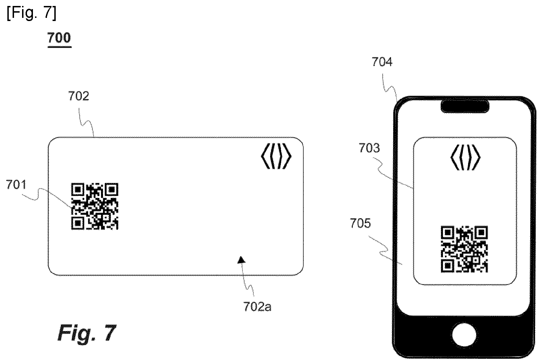

Selon un troisième aspect de l'invention, en référence aux **Fig. 6** et **Fig. 7,** il est fourni un support **605f, 605g, 700,** d'enregistrement sur lequel est enregistrée une matrice (**E**) d'encodage obtenue à l'aide d'un procédé de génération selon l'un des quelconques modes de réalisation du premier aspect de l'invention.

Selon un premier mode de réalisation, en référence à la **Fig. 7,** la matrice (**E**) d'encodage est enregistrée sous la forme d'un code bidimensionnel **701** sur le support **700** d'enregistrement. Il peut alors être lu par un dispositif optique de lecture capable d'en déchiffrer le contenu afin d'en récupérer la matrice (**E**) d'encodage et le transmettre à un terminal d'identification biométrique tel que décrit ci-après. Le support peut, par exemple, être un support **702** en papier ou en plastique, tel qu'un ticket ou billet de transport, d'un évènement sportif ou culturel.

Le code bidimensionnel peut, par exemple, être imprimé sur la surface **702a** du support **702**. Le support peut également être un ticket ou un billet électronique **703** enregistré dans une mémoire non-transitoire d'un dispositif électronique mobile **704** tel qu'un téléphone multifonctions, et affichable sur un écran **705** dudit dispositif électronique mobile **704** afin de permettre une lecture du code bidimensionnel dont il est porteur.

Selon un deuxième mode de réalisation, le support d'enregistrement est un support d'enregistrement non-transitoire lisible par un dispositif de traitement de données tel qu'un ordinateur. La matrice (**E**) d'encodage peut être alors être enregistrée sous la forme d'un code machine en binaire. Le support d'enregistrement peut être notamment une mémoire non-transitoire **605f, 605g** d'un dispositif électronique mobile **600** tel qu'un téléphone multifonction dont le contenu est lisible par un dispositif de lecture sans contact selon un protocole de communication en champ proche (« Near-Field Communication ») et/ou à courte distance tel que Bluetooth® ou Wi-Fi™. Il peut également être une mémoire non-transitoire d'une carte à puce dont le contenu est lisible par un dispositif de lecture sans contact selon un protocole de communication similaire.

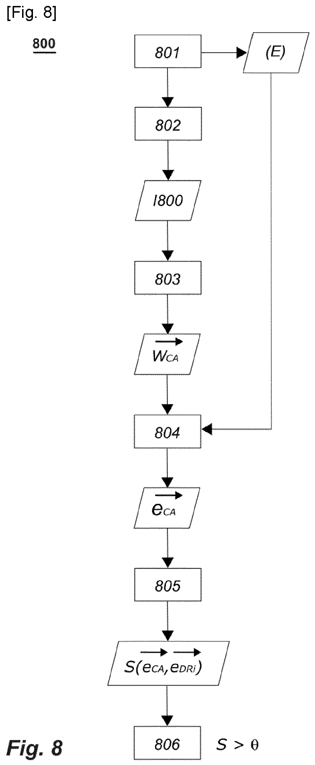

Selon un quatrième aspect de l'invention, en référence à la **Fig. 8,** il est fourni un procédé **800** d'identification biométrique d'un individu à l'aide d'une matrice (**E**) d'encodage obtenue à l'aide d'un procédé **300** selon le premier aspect de l'invention. Le procédé **800** comprend les étapes suivantes :

(a) Récupérer **801** une matrice (**E**) d'encodage d'un individu **103, 507** par lecture, de préférence sans contact, d'un support **605f, 605g, 700** d'enregistrement ;
(b) Acquérir **802** une donnée biométrique dudit individu **103, 507** ;
(c) Générer **803,** à partir de la donnée biométrique **I800**, un vecteur $\overline{w}_{CA}$ de carte d'activation par application d'un réseau de neurones convolutif ;
(d) Générer **804,** à partir du vecteur $\overline{w}_{CA}$ de carte d'activation, un vecteur $\overline{e}_{CA}$ d'encodage par application de la matrice (**E**) d'encodage ;
(e) Calculer **805** une mesure **S** de similarité entre le vecteur $\overline{e}_{CA}$ d'encodage et une direction $E_{o3},$ de référence ;
(f) Valider **806** l'identification de l'individu **103, 507** par comparaison de la valeur de la mesure **S** de similarité avec une valeur seuil $\theta$ préalablement définie.

L'ordre d'exécution des étapes **801** à **803** importe peu sous réserve que l'étape **803** soit exécuté après l'étape **802**. Par exemple, les étapes **802** et **803** peuvent être réalisées avant l'étape **801,** ou encore les étapes 801 et 802 peuvent être réalisées simultanément après l'exécution de l'étape **802**.

Lors de l'étape **804,** un vecteur $\overline{e}_{CA}$ d'encodage est généré par application de la matrice (**E**) d'encodage enregistrée dans le support **605f, 605g, 700** d'enregistrement sur le vecteur $\overline{w}_{CA}$ de carte d'activation générée à partir de la donnée biométrique. Si la donnée biométrique correspondant à celle utilisée pour générer la matrice (**E**) d'encodage selon un procédé **300** de génération conforme au premier aspect de l'invention, le vecteur $\overline{e}_{CA}$ d'encodage représente alors la direction $\overline{u}_{DRu}$ de référence, ci-après dénommée « direction de référence utilisateur », définie lors de la génération de ladite matrice (**E**) d'encodage.

A l'étape **805,** le vecteur $\overline{e}_{CA}$ d'encodage est comparé à une direction $\overline{u}_{DRi}$ de référence, ci-après dénommée « direction de référence d'identification », à l'aide d'un calcul de mesure S de similarité. Cette direction $\overline{u}_{DRi}$ de référence d'identification est une direction de référence « attendue » pour la matrice (**E**) d'encodage. Elle est la direction $\overline{u}_{DR}$ de référence qui a été utilisée pour générer la matrice (**E**) d'encodage à partir d'une donnée biométrique de même type pour l'individu **103, 507** Autrement dit, lors de l'identification, il est attendu que l'application de la matrice (**E**) d'encodage sur la donnée biométrique acquise de l'individu **103, 507** génère un vecteur $\overline{e}_{CA}$ d'encodage identique, sinon sensiblement similaire, à la direction $\overline{u}_{DR}$ de référence qui a été utilisée pour générer la matrice (**E**) d'encodage à partir d'une donnée biométrique de même type pour l'individu **103, 507.**

A l'étape **806,** si la valeur de la mesure S de similarité est supérieure à une valeur seuil, la « direction de référence utilisateur » $\overline{u}_{DRu}$ représentée par le vecteur $\overline{e}_{CA}$ d'encodage est considérée comme identique à la « direction de référence d'identification » $\overline{u}_{DRi}$ et l'identification de l'individu **103, 507** est validée. Dans le cas contraire, l'identification de l'individu **103, 507** n'est pas validée et il ne peut accéder à la ressource, au site ou à l'évènement pour lequel le procédé **800** d'identification est mis en œuvre.

L'échec d'une identification peut avoir plusieurs origines. Par exemple, la matrice (**E**) d'encodage utilisée par l'individu **103, 507** pour s'identifier n'a pas été générée pour permettre un accès à la ressource, au site ou à l'évènement auquel il souhaite accéder, notamment si l'utilisateur ne s'est pas enrôlé pour cet accès. En d'autres termes, la « direction de référence utilisateur » $\overline{u}_{DRu}$ définie lors de la génération de la matrice (**E**) d'encodage ne correspond pas à la « direction de référence d'identification » $\overline{u}_{DRi}$ attendue lors de l'opération d'identification. Dans un autre exemple, la donnée biométrique utilisée pour générer la matrice (**E**) d'encodage ne correspond pas à la donnée biométrique acquise à l'étape **802** lors de l'opération d'identification. Une telle situation peut avoir lieu lorsque l'individu qui se présente lors de l'identification ne correspond pas à l'individu dont la donnée biométrique a été utilisée pour la génération de la matrice d'encode lors d'une phase d'enrôlement, par exemple dans le cas d'une usurpation d'identité par un tiers.

De préférence, le vecteur $\overline{w}_{CA}$ de carte d'activation obtenue à l'étape **803** du procédé **800** d'identification selon le quatrième aspect de l'invention est obtenu selon une méthode similaire à celle utilisée pour générer le vecteur $\vec{v}_{CA}$ de carte d'activation fourni, comme donnée d'entrée, au procédé **300** de génération d'une matrice (**E**) d'encodage selon le premier aspect de l'invention. En particulier, les filtres de convolution et/ou les réseaux de neurones utilisés dans le procédé **300** de génération selon le premier aspect de l'invention et le procédé **800** d'identification selon le quatrième aspect de l'invention sont adaptés de sorte que les caractéristiques qu'ils encodent dans les cartes d'activation qu'ils génèrent à partir de données biométriques sensiblement similaires soient également similaires. De préférence, les filtres de convolution et/ou les réseaux de neurones sont sensiblement similaires entre les deux procédés, voire identiques.

La mesure $S$ de similarité calculée lors de l'étape **805** est de tout type adapté pour mesurer un degré de similarité entres deux vecteurs. Selon certains modes préférés de réalisation, la mesure $S$ de similarité est choisie parmi une similarité cosinus, une distance euclidienne ou une distance de Hamming. A titre d'exemple, une mesure $S$ de similarité cosinus peut s'exprimer de la manière suivante : $S = \frac{\vec{e}_{CA} \cdot \vec{u}_{DRi}}{\|\vec{e}_{CA}\| \|\vec{u}_{DRi}\|}$ . A l'étape **806**, l'identification de l'individu **103, 507** est alors validée lorsque la mesure (**S**) de similarité est inférieure ou égale à la valeur ($\theta$).

Selon certains modes préférés de réalisation, lorsque la mesure (**S**) de similarité est inférieure ou égale à la valeur seuil ($\theta$), le procédé **800** renvoie une chaîne spécifique de caractères, et, lorsque de la mesure (**S**) de similarité est supérieure à la valeur seuil ($\theta$), le procédé **800** renvoie une chaîne aléatoire de caractères. Par exemple, le procédé **800** peut comprendre l'application d'une fonction qui renvoie, sur la base de la mesure (**S**) de similarité, une chaîne spécifique de caractères lorsque le vecteur d'encodage $\overline{e}_{CA}$ est sensiblement identique à la direction $\overline{u}_{DRi}$ de référence et une chaîne aléatoire de caractères dans le cas contraire. La chaîne spécifique de caractère peut être le chiffre unité ou être dérivée à partir du vecteur $\overline{e}_{CA}$ d'encodage considéré comme une clé cryptographique. L'identification est alors validée selon que la chaîne de caractères est conforme ou non à un attendu. Par exemple, l'attendu peut être chaîne de caractères associée à l'individu et stockée dans une base de données.

Selon certains modes de réalisation, lorsque la matrice (**E**) d'encodage est une matrice (**O**) d'encodage offusquée telle que décrite précédemment dans le cadre du premier aspect de l'invention, le procédé **800** d'identification comprend, après l'étape **801** et avant l'étape **804**, une étape **804a** de calcul d'une matrice (**E**) d'encodage par application d'une matrice ($S^{-1}$) de révélation sur la matrice (**O**) d'encodage offusquée, ladite matrice ($S^{-1}$) de révélation étant la matrice inverse de la matrice inversible (**S**) aléatoire d'offuscation utilisée pour offusquer ladite matrice (**E**) d'encodage.

La matrice ($S^{-1}$) de révélation est une matrice connue de l'entité de confiance dont la matrice inversible (**S**) aléatoire d'offuscation utilisé pour offusquer ladite matrice (**E**) d'encodage est propre. De préférence, elle est connue uniquement d'elle. Autrement dit, seule l'entité de confiance a la possibilité d'appliquer la matrice par la connaissance des valeurs de ses coefficients ou termes et/ou les moyens de la mettre en œuvre. Cette matrice peut éventuellement être enregistrée dans une mémoire d'un élément sécurisé.

Dans un cinquième aspect de l'invention, en référence aux **Fig. 1, Fig. 2, Fig. 6 & Fig. 7**, il est fourni un terminal **101, 200** d'identification biométrique d'un individu **103** comprenant :

- un dispositif **201, 206** d'acquisition d'une donnée biométrique d'un individu ;
- un dispositif **105** de lecture d'un support **104, 700, 605f, 605g** d'enregistrement sur lequel est enregistrée une matrice (**E**) d'encodage obtenue à l'aide d'un procédé **300** de génération selon l'un quelconque des modes de réalisation du premier aspect de l'invention ;
- un dispositif **202** de traitement de données comprenant des moyens pour la mise en œuvre d'un procédé **800** d'identification selon l'un quelconque des modes de réalisation du quatrième aspect de l'invention.

Un terminal d'identification biométrique selon le cinquième aspect de l'invention peut être utilisé pour autoriser un passage aux frontières d'un état, un accès à un ou plusieurs services à distance, un accès à des informations stockées dans une base collective ou personnelle de données, vérifier l'identité d'une ou plusieurs personnes, récupérer des identifiants de connexion, ou encore récupérer une ou plusieurs adresses de portefeuilles de monnaie électronique telle qu'une cryptomonnaie.

**Références**

Littérature brevet

US 4109237 A [HILL ROBERT B] 22.08.1978.
WO 9526013 A1 [MINNESOTA MINING & MFG [US]] 28.09.1995.
EP 2 813 961 A1 [KONVALINKA IRA [CA]] 17.12.2014.
WO 2017/019972 A1 [VISA INT SERVICE ASS [US]] 02.02.2017.

Littérature non-brevet

Dodis, et al. (2004), "Fuzzy extractors: How to generate strong keys from biometrics and other noisy data." Advances In Cryptology-EUROCRYPT 2004: International Conference On The Theory And Applications Of Cryptographic Techniques, Interlaken, Proceedings 23.

He, K., Zhang, X., Ren, S., & Sun, J. (2016). Deep residual learning for image recognition. In Proceedings of the IEEE conference on computer vision and pattern recognition (pp. 770-778).

Galbraith, et al (2019). "Obfuscated fuzzy hamming distance and conjunctions from subset product problems." Theory of Cryptography Conference.

Dosovitskiy, A. (2020). An image is worth 16x16 words: Transformers for image recognition at scale. arXiv preprint arXiv:2010.11929.

## Revendications

1. Procédé (**300**), mis en œuvre par un dispositif de traitement de données, de génération d'une matrice (**E**) d'encodage biométrique, le procédé (**300**) prend, en données d'entrée (**I300**), un vecteur $\overline{v}_{CA}$, d'une carte d'activation d'un réseau de neurones appliqué sur au moins une image d'au moins une donnée biométrique d'un individu (**103**), et fournit, en donnée de sortie (**O300**), une matrice (**E**) d'encodage, le procédé (**300**) comprend les étapes suivantes :

   (a) Générer (**301**), à partir de la carte d'activation, une matrice (**P**) de projection selon une direction ($\overline{u}_{DR}$) de référence ;
   (b) Générer (**302**) une matrice (**R**) de rotation laissant invariante la direction $\overline{u}_{DR}$ de référence ;
   (c) Calculer (**303**) une matrice composée à partir de la matrice (**P**) de projection et de la matrice (**R**) de rotation, la matrice composée étant la matrice (**E**) d'encodage.

2. Procédé selon la revendication 1, tel que la matrice (**R**) de rotation est une matrice aléatoire.

3. Procédé selon l'une quelconque des revendications 1 à 2, tel que la direction $\overline{u}_{DR}$ de référence est propre à une base de données d'identification d'une pluralité d'individus et/ou à une entité de confiance pour l'identification d'un ou plusieurs individus.

4. Procédé (**300**) selon l'une quelconque des revendications 1 à 3, tel que la donnée biométrique de l'individu peut notamment être choisie parmi un ou plusieurs dactylogrammes digitaux et/ou palmaires, une ou plusieurs images d'iris iris et/ou une ou plusieurs images de visage, ou leur combinaison.

5. Procédé (**300**) selon l'une quelconque des revendication 1 à 4, tel qu'il comprend, en outre, les étapes suivantes :

   (e) Générer (**303a**), avant l'étape de calcul (**303**), une matrice inversible (**S**) aléatoire d'offuscation propre à une entité de confiance pour l'identification d'un ou plusieurs individus ;
   (f) Calculer (**304**), après l'étape de calcul (**303**), une matrice (**O**) = (**S**)(**E**) d'encodage offusquée composée de la matrice inversible (**S**) aléatoire et de la matrice (**E**) d'encodage.

6. Terminal (**500, 600**) d'encodage biométrique comprenant des moyens pour mettre en œuvre un procédé (**300**) de génération d'une matrice (**E**) d'encodage biométrique selon l'une quelconque des revendications 1 à 5.

7. Support (**605f, 605g, 700**) d'enregistrement sur lequel est enregistrée une matrice d'encodage obtenu à l'aide d'un procédé (**300**) de génération selon l'une quelconque des revendications 1 à 5.

8. Support (**701**) selon la revendication 7, tel que la matrice (**E**) d'encodage est enregistrée sous la forme d'un code bidimensionnel (**701**) sur le support (**700**) d'enregistrement.

9. Support selon la revendication 7, tel qu'il est un support (**605f, 605g**) d'enregistrement non-transitoire lisible par un dispositif de traitement de données.

10. Procédé (**800**) d'identification biométrique d'un individu à l'aide d'une matrice (**E**) d'encodage obtenue à l'aide d'un procédé (**300**) selon l'une quelconque des revendications 1 à 4, le procédé (**800**) comprend les étapes suivantes :

    (a) Récupérer (**801**) une matrice (**E**) d'encodage d'un individu (**103, 507**) par lecture, de préférence sans contact, d'un support (**605f, 605g, 700**) d'enregistrement ;
    (b) Acquérir (**802**) une donnée biométrique dudit individu (**103, 507**) ;
    (c) Générer (**803**), à partir de la donnée biométrique (**I800**), un vecteur ($\overline{w}_{CA}$) de carte d'activation par application d'un réseau de neurones ;
    (d) Générer (**804**), à partir du vecteur ($\overline{w}_{CA}$) de carte d'activation, un vecteur ($\overline{e}_{CA}$) d'encodage par application de la matrice (**E**) d'encodage ;
    (e) Calculer (**805**) une mesure (**S**) de similarité entre le vecteur ($\overline{e}_{CA}$) d'encodage et une direction ($\overline{u}_{DRi}$) de référence ;
    (f) Valider (**806**) l'identification de l'individu (**103, 507**) par comparaison de la valeur de la mesure (**S**) de similarité avec une valeur seuil ($\theta$) préalablement définie.

11. Procédé (**800**) selon la revendication 10 pour l'identification biométrique d'un individu à l'aide d'une matrice (**E**) d'encodage obtenue à l'aide d'un procédé (**300**) selon la revendication 5, tel qu'il comprend, après l'étape (**801**) et avant l'étape (**804**), une étape **(804a)** de calcul d'une matrice (**E**) d'encodage par application d'une matrice ($S^{-1}$) de révélation sur la matrice (**O**) d'encodage offusquée, ladite matrice ($S^{-1}$) de révélation étant la matrice inverse de la matrice inversible (**S**) aléatoire d'offuscation utilisée pour offusquer ladite matrice (**E**) d'encodage.

12. Procédé (**800**) selon l'une quelconque des revendications 10 à 11, tel que la mesure **(S)** de similarité est choisie parmi une similarité cosinus, une distance euclidienne ou une distance de Hamming.

13. Procédé (**800**) selon l'une quelconque des revendications 10 à 12, tel que, lorsque la mesure **(S)** de similarité est inférieure ou égale à la valeur seuil ($\theta$), il renvoie une chaîne spécifique de caractères, et, lorsque de la mesure **(S)** de similarité est supérieure à la valeur seuil ($\theta$), il renvoie une chaîne aléatoire de caractères.

14. Terminal **(101, 200)** d'identification biométrique d'un individu (**103**) comprenant :

   - un dispositif **(201, 206)** d'acquisition d'une donnée biométrique d'un individu ;
   - un dispositif (**105**) de lecture d'un support (**104, 700, 605f, 605g**) d'enregistrement sur lequel est enregistrée une matrice (**E**) d'encodage obtenue à l'aide d'un procédé (**300**) de génération selon l'une quelconque des revendications 1 à 5 ;
   - un dispositif (**202**) de traitement de données comprenant des moyens pour la mise en œuvre d'un procédé (**800**) d'identification selon l'une quelconque des revendications 10 à 13.

[Fig. 1]

**100**

*Fig. 1*

[Fig. 2]

**200**

*Fig. 2*

[Fig. 3]

**300**

Fig. 3

[Fig. 4]

(a)                    (b)                    (c)

Fig. 4

[Fig. 5]

**500**

Fig. 5

[Fig. 6]

**600**

Fig. 6

[Fig. 7]

**700**

*Fig. 7*

[Fig. 8]

**800**

**Fig. 8**

$S > \theta$

**EP 4 738 285 A1**

Europäisches
Patentamt

European
Patent Office

Office européen
des brevets

# RAPPORT DE RECHERCHE EUROPEENNE

Numéro de la demande

EP 25 18 4566

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | KIM SUNPILL ET AL: "IronMask: Modular Architecture for Protecting Deep Face Template", 2021 IEEE/CVF CONFERENCE ON COMPUTER VISION AND PATTERN RECOGNITION (CVPR), IEEE, 20 juin 2021 (2021-06-20), pages 16120-16129, XP034008686, DOI: 10.1109/CVPR46437.2021.01586 | 1,4, 6-10,12, 14 | INV. G06V10/82 G06V40/50 G06F21/32 G06F21/35 G06F21/36 G06N3/045 |
| A | * figures 1, 2 * * section 1 * * section 2.2 * ----- | 2,3,5, 11,13 | |
| A | Zhong Zhizhou ET AL: "SlerpFace: Face Template Protection via Spherical Linear Interpolation", arXiv.org, 3 juillet 2024 (2024-07-03), pages 1-20, XP093255111, Extrait de l'Internet: URL:https://arxiv.org/pdf/2407.03043v1 * le document en entier * ----- | 1-14 | |

**DOMAINES TECHNIQUES RECHERCHES (IPC)**

G06V

Le présent rapport a été établi pour toutes les revendications

| Lieu de la recherche | Date d'achèvement de la recherche | Examinateur |
|---|---|---|
| La Haye | 24 juillet 2025 | Martinez, Francis |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P4C02)

## RÉFÉRENCES CITÉES DANS LA DESCRIPTION

**Documents brevets cités dans la description**

- WO 9526013 A1
- US 4109237 A, HILL ROBERT B
- EP 2813961 A1
- WO 2017019972 A1

**Littérature non-brevet citée dans la description**

- **DODIS et al.** Fuzzy extractors: How to generate strong keys from biometrics and other noisy data. *Advances In Cryptology-EUROCRYPT 2004: International Conference On The Theory And Applications Of Cryptographic Techniques, Interlaken, Proceedings 23*, 2004
- **GALBRAITH et al.** Obfuscated fuzzy hamming distance and conjunctions from subset product problems. *Theory of Cryptography Conference*, 2019
- **HE, K.** ; **ZHANG, X.** ; **REN, S.** ; **SUN, J.** Deep residual learning for image recognition. *Proceedings of the IEEE conference on computer vision and pattern recognition*, 2016, 770-778
- **DOSOVITSKIY, A.** An image is worth 16x16 words: Transformers for image recognition at scale.. *arXiv preprint arXiv:2010.11929*, 2020
- **DODIS et al.** Fuzzy extractors: How to generate strong keys from biometrics and other noisy data. *Advances In Cryptology-EUROCRYPT 2004: International Conference On The Theory And Applications Of Cryptographic Techniques, Interlaken, Proceedings*, 2004, vol. 23
- **DOSOVITSKIY, A.** An image is worth 16x16 words: Transformers for image recognition at scale. *arXiv preprint arXiv:2010.11929*, 2020